# EUROPEAN PATENT SPECIFICATION

(11) **EP 2 215 195 B1**
(45) Date of publication and mention of the grant of the patent: **13.07.2016**
(21) Application number: 08837612.4
(22) Date of filing: 25.09.2008
(51) Int. Cl.: C11B 3/00, C11C 3/00, C10L 1/02

(54) **AN IMPROVED PROCESS FOR THE PREPARATION OF BIODIESEL FROM VEGETABLE OILS CONTAINING HIGH FFA**
VERBESSERTES VERFAHREN ZUR HERSTELLUNG VON BIODIESEL AUS PFLANZENÖLEN MIT HOHEM FFA-GEHALT
PROCÉDÉ AMÉLIORÉ DE PRÉPARATION DE BIODIESEL À PARTIR D'HUILES VÉGÉTALES À TENEUR ÉLEVÉE EN ACIDES GRAS LIBRES (AGL)

(30) Priority: 09.10.2007 IN DE21182007
(43) Date of publication of application: 11.08.2010
(73) Proprietor: Council of Scientific & Industrial Research, New Delhi 110 001 (IN)
(72) Inventor: RAO, Kasturi, Venkata, Sesha, Adinarayana, Hyderabad 500 007, Andhra Pradesh (IN); SARAVANAN, Krishnasamy, Hyderabad 500 007, Andhra Pradesh (IN); VIJAYALAKSHMI, Penumarthy, Hyderabad 500 007, Andhra Pradesh (IN)
(74) Representative: Rees, Kerry
(86) International application number: PCT/IN2008/000613
(87) International publication number: WO 2009/047793

(56) References cited:
- WO-A-03/076558
- WO-A-2007/083213
- WO-A-2007/093326
- GB-A- 578 751
- US-A- 2 383 614
- US-A1- 2007 124 992
- BERCHMANS ET AL: "Biodiesel production from crude Jatropha curcas L. seed oil with a high content of free fatty acids" BIORESOURCE TECHNOLOGY, ELSEVIER, GB, vol. 99, no. 6, 24 May 2005 (2005-05-24), pages 1716-1721, XP022410797 ISSN: 0960-8524
- MEHER L C ET AL: "Optimization of alkali-catalyzed transesterification of Pongamia pinnata oil for production of biodiesel" BIORESOURCE TECHNOLOGY, ELSEVIER, GB, vol. 97, no. 12, 1 August 2006 (2006-08-01), pages 1392-1397, XP025105956 ISSN: 0960-8524 [retrieved on 2006-08-01]

## Description

### Field of the invention

The present invention relates to an improved process for the preparation of biodiesel from jatropha or karanja oil containing high contents of free fatty acids (FFA). Particularly the present invention relates to deacidification of FFA from the crude jatropha or karanja oil by liquid-liquid extraction followed by transesterification for the preparation of biodiesel.

### BACK GROUND OF THE INVENTION

High price of fossil fuel and increasing demand in energy requirement in a developing country like India is compelling the attention on alternate fuels. One such possible alternative to fossil fuels appears to be use of renewable fuels of plant origin.
India ranks sixth in the world in terms of energy demands and accounts for 3.5% of the world requirement. The country is mostly dependent on imported petroleum crude that supplies about 70% of its energy requirement. The country's demand for energy is increasing at the rate of 6% annually compared to 2% for many other countries. The share of petrodiesel is 40% of total crude oil consumed while that of petrol (gasoline) is only about 8 %. Moreover, petro fuels contribute about 70% to the atmospheric pollution. Hence, vegetable oil derivatives, mainly methyl esters, have become popular as biofuels.
Edible oils such as soybean oil in the United States, rapeseed oil in Europe, palm oil in Malaysia are being used as raw material sources for biodiesel. As India imports more than 40% of its edible oil requirement, it has to depend on non-edible oils for biodiesel. Various non-edible tree borne oils such as Neem, Mahua, Jatropha, Pongamia, etc. are options for India, where *Jatropha curcas* and *Pongamia pinnata* (Karanja) are gaining attention and prominence as feed-stock for biodiesel.

Many crude oils from natural sources like animal or vegetable fats, apart from gums and unsaponifiable matter also contain varying amount of free fatty acids. Many methods are described in prior art for conversion of such oils to methyl esters for use as diesel fuel substitutes called as biodiesel and oleochemical feed stocks. Most methods described involve a two step process, the initial step comprises of conversion of free fatty acids to esters followed by transesterification of glycerides to methyl esters. Generally the first step is acid catalyzed while the latter is catalyzed by alkali. Direct transesterification of oils containing free fatty acids is uneconomical for commercial production as the yields are low. Direct transesterification of oils requires <0.5 of acid value.

A process for conversion of crude palm oil or palm oil fractions containing fatty acids to methyl esters on a pilot scale has been described. The method consists of initial catalytic esterification of free fatty acids to methyl esters followed by catalytic transesterification of glycerides to methyl esters in a two-step continuous process in 90% yield. The novel aspect of the process (UK Patent 2,148,897) is the esterification reaction where solid acid catalysts (alkali metal bisulphates) are employed thus obviating the washing stage after esterification. UK Patent 2,161,897 described a similar process using ammonium bisulphate followed by sodium hydroxide as catalysts. An esterification method with added glycerol at 210-230°C at reduced pressure followed by transesterification of the triglycerides using NaOH, KOH or ZnO as catalyst (Fr. Pat., 1,402,133) has also been described. German Patent, 3,319,590 described a homogenous acid catalyzed esterification with glycerol and methanol at temperatures not greater than 120° C, separation into glycerol phase containing acid catalyst and water of reaction and an oil phase, the latter transesterified using sodium methylate with added methanol at 60-65° C to yield methyl ester in 97% yield. In a variation of this process, sodium stearate is added at the second stage to speed up the reaction (US Pat. 4,303,590) A process described in the Japanese Patent 78,114,805 involves separating out the undesirable polypeptides and phospholipids in the alcohol layers of the first step and interesterifying substantially refined soapstock in the second step. Initially, a three hour acid-catalyzed direct esterification with methanol at 65-67° C converts free fatty acids to methyl esters and then a two-stage base catalyzed methanolysis at time cycles of 1 h and 0.5 h respectively carried out on the oil phase from the first step, converts the triglycerides to methyl esters. The Hoechst process (German Pat., 3,421,217) consists of contacting the fat body with a stream of methanol vapor at 240°C in the presence of an alcoholysis catalyst such as sodium methoxide. The reaction products, methyl esters and glycerol are stripped from the liquid phase as soon as they are formed. After partial condensation of the vapor phase, the glycerol is separated from methyl esters. The alcohol vapour is returned to the reaction zone. A portion of the methanol is withdrawn from the loop and replaced with fresh alcohol to keep the concentration of water of reaction to low levels. A process described in US Patent 4,303,590 consist of first esterifying the free fatty acids in an oil with a special synthetic resin catalyst and then transesterifying the remaining neutral oil with sodium methoxide. Jeromin et al (Fette Seifen Anstrichm 1981, 83, 493) have reported esterification of fatty acids using an alkaline catalyst. Haas and Scott (J. Am. Oil Chem. Soc. 1996, 73, 1393) described a combined chemical-enzymatic process for the glycerides present in the soapstock which are transesterified with alcohol and potassium hydroxide and in the second step the free fatty acids are esterified using a lipase. An alkaline catalyst (J. Am. Oil Chem. Soc. 1984, 61, 343) that catalyzed both esterification and transesterification at a pressure of 90 bar has been reported. A process for the preparation of fatty acid alkyl esters is claimed that comprises transesterification of glycerides in the presence of acidic catalyst at elevated pressure and temperature. Thus, coconut oil containing 3.8% by weight of bound glycerol gave the product (AV 0.8) containing 1.0% of bound glycerol (Ger. Offen DE 4,122,530). Production of alkyl esters by catalytic esterification / transesterification of natural fats and oils containing free fatty acids is described in US Patent 4,652,406. In the preliminary step the free fatty acids present are reacted with C₁ - C₄ alcohol in the presence of an acidic esterification catalyst at a temperature of about 50 to 120° C. The reaction mixture is allowed to separate into two phases: an alcohol phase containing the acidic esterification catalyst and part of water of reaction and the oil phase. Then the oil phase is extracted with an immiscible extractant, comprising a mixture of glycerol and methanol, to remove the residual water of reaction. In the subsequent step the extracted oil phase is transesterified with C₁ - C₄ alcohol in the presence of an alkali catalyst. A method is described using zinc oxide or zinc hydroxide as catalysts for esterification-transesterification of a mixture containing fats, fatty acids, tocopherols, sterols etc.

A study performed of the transesterification reaction of used frying oil by means of methanol and different alkaline catalysts like sodium hydroxide, potassium hydroxide, sodium methoxide and potassium methoxide as transesterifacation catalysts is described in Ind. Eng. Chem. Res. 2005, 44, 5491-5499. A paper describes the effects of water on biodiesel fuel production by supercritical methanol treatment, {Bioresource Technology (Elsevier), 91 (2004) 289-295} where the negative effects of moisture on the transesterification reaction are discussed. A paper published describes transesterification of six vegetable oil samples in supercritical methanol without using any catalyst, {Energy Conversion and Management (Pergamon) 43 (2002) 2349-2356.} Another research paper describes the production of biodiesel fuel from triglycerides and alcohol using immobilized lipase, {Journal of Molecular Catalysis (Elsevier) 16 (2001) 53-58}.

Many of the review articles with a number useful quoted references are available in the literature on the preparation of methyl esters i.e., biodiesel which are highly informative. Biodiesel production: a Review, Bioresource Technology (Elsevier) 70 (1999) 1-15. Transesterification of vegetable oils: a Review, J. Braz. Chem. Soc. Vol.9 No.1 (1998) 199-210. Biodiesel fuels from vegetable oils via catalytic and non-catalytic supercritical alcohol transesterification and other methods: a Survey, Energy Conversion and Management (Pergamon) 44 (2003) 2093-2109. Biodiesel Production and Fuel Quality by Prof. Jon Van Gerpen, www.uidaho.edu/bioenergy/biodieselED/publication/0.1.pdf. Recent US patent No.A1/2005108927 (2005) describes the bubble washing and microfiltration at controlled temperature and turbulence conditions in the production of biodiesel. US patent A1/20050080279 (2005) describes the production of fatty acid esters where glycerine is reacted with glycerides containing high levels of fatty acids which inhibit transesterification.

US patent A1/20050204612 (2005) describes a method for the continuous production of biodiesel from biogenic fat or oil- containing starting mixtures with a high content of free fatty acids as well as a device for producing biodiesel. US patent A1/20050081436 (2005) describes a method where Magnesium silicate is used as adsorbent in purification for removing impurities such as soap during the production of biodiesel fuels. US Patent A1/20050011112 (2005) describes a method for producing biodiesel from oleaginous seeds like castor bean seeds where the seeds itself are reacted with anhydrous ethyl alcohol in the presence of an alkaline catalyst.

WO 2007/093326 discloses a method for producing biodiesel starting from fresh or recycled vegetable or animal oils and/or fats which is equally effective regardless of the initial FFA value of the initial oil and/or fat.

GB 578,751 describes a process for the production of alkylesters of fatty acids from fats and fatty oils containing excess free fatty acids.

US 2007/124992 discloses methods for recovery of concentrates of lubricating compounds and biologically active compounds from vegetable and animal oils, fats and greases that allow separation of triglycerides from components with higher lubricity or biological activity or enrichment protocols that increase the concentration of high lubricity or biologically active compounds in the triglycerides.

H.J. Berchmans et al., Bioresource Technology 99 (2008) 1716-1721 describes a technique to produce biodiesel from crude Jatropha curcas seed oil having high free fatty acids.

L.C. Meher et al., Bioresource Technology 97 (2006) 1392-1397 details studies caried out on transesterification of Karanja oil with methanol for the production of biodiesel

### Objectives of the invention

The main objective of the present invention is to provide an improved process for the preparation of biodiesel after deacidification of crude jatropha or karanja oil by liquid -liquid extraction (LLE) using polar organic solvent.

Another object of the present invention is a non destructive extraction of bioactive components present in crude jatropha or karanja oil into the solvent phase by LLE.

Yet another object of the invention is in situ esterification of the extract containing FFA.

Yet another object of the invention is to provide the purification of crude alkaline biodiesel after neutralization by adsorption utilizing an adsorbent like celite.

Yet another object is to provide the purification of crude alkaline biodiesel directly or after neutralization by LLE using aqueous polar organic solvent.

### SUMMARY OF INVENTION

Accordingly the present invention provides an improved process for the preparation of biodiesel from crude jatropha or karanja oil containing high FFA and the said process comprising the steps of:
a) deacidifying the crude jatropha or karanja oil containing high free fatty acid by liquid- liquid extraction with polar organic solvent in an extraction equipment either in a batch or continuous mode to obtain the resultant oil raffinate and an extract (solvent phase) containing FFA, polar materials and the bioactive components.
b) esterifying in situ the above said extract containing FFA obtained in step (a) with an acid catalyst by known method to obtain the resultant esterified extract and mixing it to the oil raffinate obtained in step(a), followed by adsorptive filtration to remove the free suspended solids and
c) subjecting the resultant oil filtrate obtained in step (b) to transesterification using methanol, in the presence of base catalyst by known method, followed by the separation of crude ester from glycerol phase and purifying the crude ester either by celite adsorption or by liquid- liquid extraction using 1-20% aqueous polar organic solvent with a ratio of crude ester to solvent in the range of 1:1 to 1:4 to separate out the desired pure biodiesel phase and filtering the left out solvent phase after neutralization to obtain the impure ester and recycling it to step (a) along with crude oil feed for further use.

In an embodiment of present invention the FFA content of the jatropha or karanja oil is in the range of 2-30%, preferably 1-10%.

In yet another embodiment the liquid-liquid extraction used in step (a) is carried out at atmospheric pressure and at or below the boiling point of the organic polar solvent.

In yet another embodiment the polar organic solvent used is preferably selected from methanol and ethanol.

In yet another embodiment the FFA content in oil raffinate obtained in step(a) is reduced to a value in the range of 0.2-1%.

In yet another embodiment the proportion of water used in aqueous organic polar solvent in step(c) for purification is preferably in the range of 1-15%.

In yet another embodiment the ratio of crude ester to aqueous polar organic solvent used in step(c) is preferably in the range of 1:0.5 to 1:3.

In still another embodiment the crude alkaline ester and aqueous polar organic solvent used in step(c) are mixed under stirring at a refluxing temperature or under simple warm condition.

### Brief description of the drawings

**Fig 1:** Fig. 1 displays a Liquid-Liquid extractor-1 made of glass with the following legend:
   1. Extract container
   2. Extractor
   3. Solvent dropping container
   4. Condenser
   5. Oil bath
   6. Heating coil
   7 & 8. Thermometers
   9. Thermo well
**Fig. 2:** Fig. 2 displays a Liquid-Liquid extractor-2 made of glass with the following legend:
   1. Extract container
   2. Extractor
   3. Condenser-E201
   4. Solvent container
   5. Oil bath
   6. Heating coil
   7 & 8. Thermometers
   9. Thermo well
   10. Metering Pump-P201
**Fig. 3:** Fig. 3 displays a schematic diagram of Liquid-Liquid extractor using CSTR (continuous stirrer tank reactor) and separator with the following legend:
   1. CSTR 10 Lt- R301
   2. Seperator-S301
   3. Condenser-E301
   4. Condenser-E302
   5. Heat Exchanger-E303
   6. Feed (oil) Vessel-ST301
   7. Solvent vessel-ST302
   8. Hot water vessel-ST303
   9. Metering pump-P301
   10. Metering Pump-302
   11. Circulation Pump-P303.

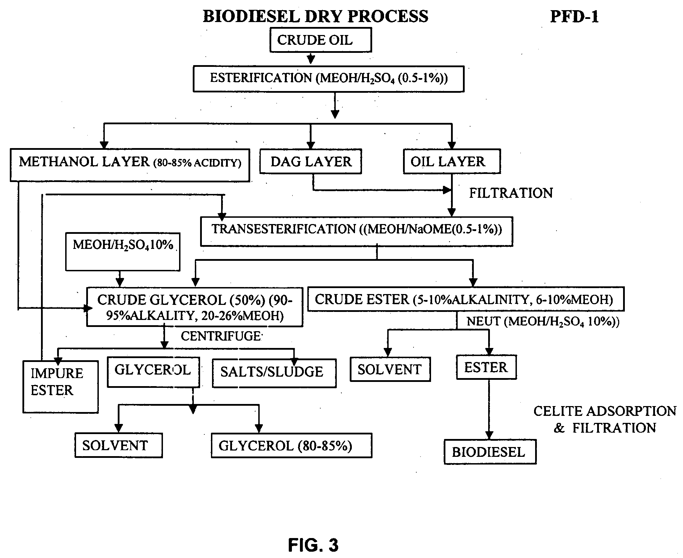

**Fig 4** **:** PFD 1 is a Flow chart which explains a Dry Process where celite an adsorbent is used to purify the biodiesel. This is an improvement over conventional process wherein there is no washing of the crude biodiesel. Washing as per the conventional process is avoided and biodiesel is purified using solid adsorbent

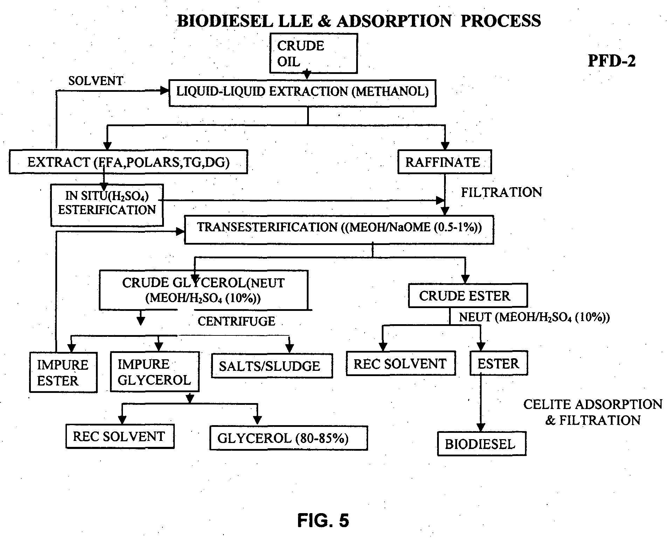

**Fig 5** **:** PFD-2 is a Flow chart which explains the novelty of LLE of Fatty acids from the oil using methanol in specially designed equipments. The crude ester is purified as per the process of PFD-1 using an adsorbent without any water washing.

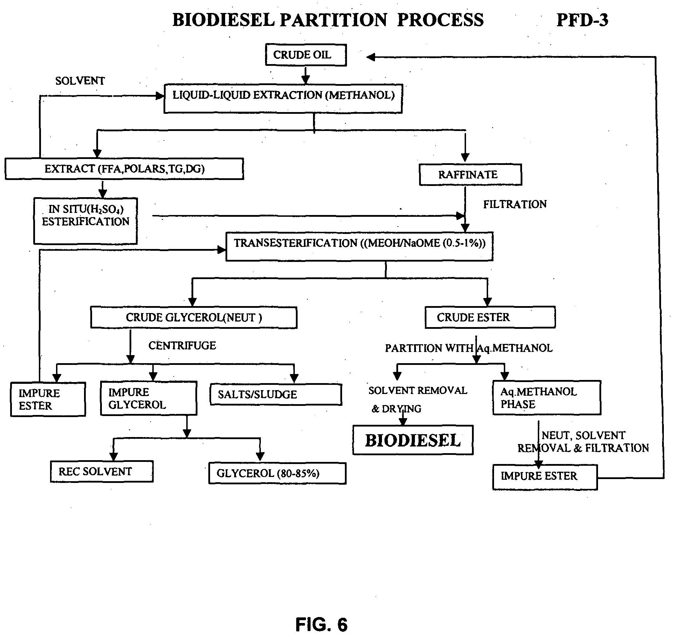

**Fig 6** **:** PFD-3 is a Flow chart which explains the LLE of Fatty acids from the oil as per PFD-2 and novelty in purification of crude biodiesel again by LLE using aqueous methanol and by virtue of this technique, water washing (conventional process), use of adsorbent (as per the PFD-2) is avoided, crude biodiesel is partitioned to get pure biodiesel of International standard specifications of AV, Moisture and Glycerol.

### Detail description of the invention

An improved process for producing biodiesel from high FFA crude jatropha or karanja oil is provided. The method consists of (a) Liquid-Liquid Extraction (LLE) of the crude oil with methanol to remove the bioactive constituents, polar materials, free fatty acids (FFA) etc., from non polar glycerides, (b) esterification of the FFA present in the extract with an acid catalyst (c) transesterification of resulting oil and separation of glycerol and crude ester in basic medium, (d) purification of crude ester by LLE to biodiesel.

The FFA content of the crude oil varies from 2 - 30%, preferably 1-10 %.

The feature of the present invention is the removal of moisture, free fatty acids, polar materials, the bioactive components etc., present in the crude oil (feed), which hamper the transesterification process selectively in a nondestructive manner by LLE into methanol phase (extract), and the resulting oil (raffinate) free from undesirable constituents, which is amenable for direct transesterification.

In an another feature of the present invention the 'dag layer' (gummy material, suspended solids and fine particles present in the feed) appeared sometime at the interface of the extract and raffinate which affects transesterification and also the subsequent glycerol separation, is removed by filtration during the process using an adsorbent like celite thus enhancing a clean transesterification.

Yet another feature of the present invention is that the extraction is affected at atmospheric pressure and at or below the boiling point of the methanol used.

In yet another feature of the present invention during the LLE process the extract containing the carried over triglyceride, and the extracted diglyceride and monoglyceride on settlement are separated out as a dense layer and can be easily removed from the methanolic extract and recycled back into the raffinate stream. The methanolic extract containing bioactive constituents and FFA can be subjected to further processing for enrichment of bio-actives, if preferred.

In yet another feature of the present invention the extract containing FFA is esterified in situ during extraction process using much lesser quantity of acid catalyst than normally used in a conventional esterification process.

In yet another feature of the present invention the extract consisting of esterified fatty acids, carried over triglycerides, diglycerides and monoglycerides etc., is mixed into raffinate for transesterification process.

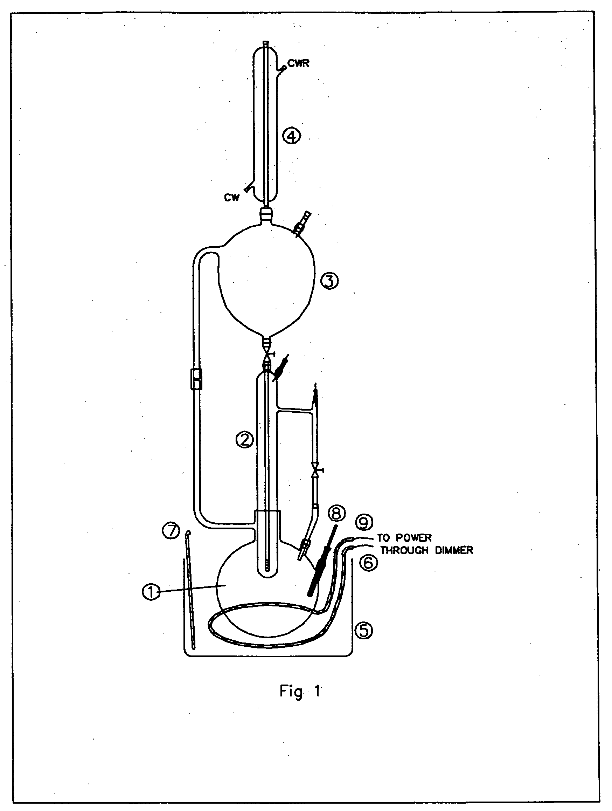

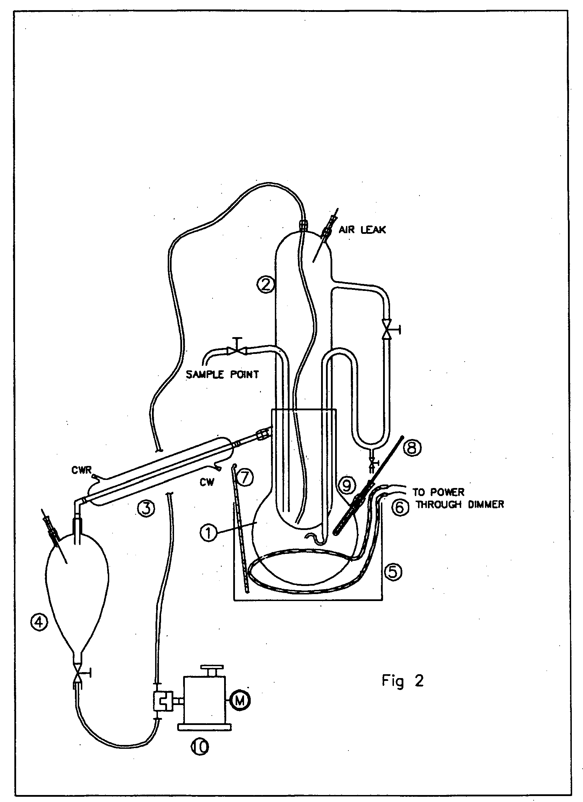

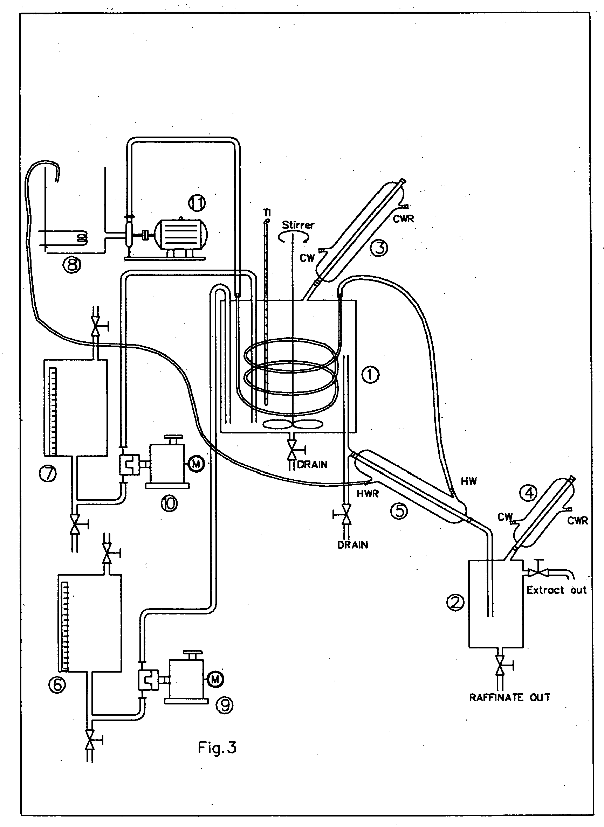

In yet another feature of the present invention the extraction of crude oil (Feed) for removal of undesirable constituents by LLE is carried out in specially designed equipment either in batch mode (Figure 1 & Figure 2) or in continuous mode (Figure 3.). The equipment as shown in the figure 1 and 2 are batch mode extraction assemblies. The extraction assembly comprises of an extract container (1) which is placed over an oil bath (5). The oil bath is heated through a heating coil (6) and is fitted with a thermometer (7) for monitoring the temperature. A thermometer is also fitted with the extract container (8) for monitoring its temperature. An extractor for carrying out the extraction process is fitted with the extract container. The sample which consists of Jatropha and Karanja in the present matter is taken in the extractor. The solvent is taken in the extract container. The solvent vaporizes when heated and moves into the condenser through the solvent dropping container and the extractor. The solvent gets condensed in the condenser and moves down to fall in form of droplets into the solvent dropping container from where it falls on the plant material in the extractor. The solvent extracts the plant constituents soluble in it and pours down into the extract container after reaching a certain level through the tube connecting it to the extract container. After the extraction the extract is collected from the extract container.

The extraction can also be carried out in continuous mode in the extraction assembly as illustrated in figure 3. The continuous mode extraction is carried out using a continuous stirred tank reactor (CSTR) (1) to which continuous stream of solvent and feed are supplied from solvent vessel (7) and feed vessel (6). The combined stream containing the extract is supplied to the separator(2) through the condenser(5) where the extract and raffinate stream are separated and collected separately. All the components of the extraction assemblies as illustrated above are made of glass.

In yet another feature of the present invention the raffinate obtained having an acid value preferably 0.2-1.0 is transesterified using methanol with a base catalyst such as sodium hydroxide, potassium hydroxide, sodium methoxide, potassium methoxide and preferably sodium methoxide and the crude biodiesel and glycerol phases are settled and separated.

In yet another feature of the present invention the glycerol phase (ca 50% pure) is neutralized and centrifuged/filtered to remove sediment (salts, gummy material) present to obtain top layer consisting of ester, fatty acids and methanol which is subjected for recycling into the feed and the bottom layer consisting of glycerol and methanol which after removal of methanol by distillation gives a residue enriched to 80-85%.

In yet another feature of the present invention the crude alkaline biodiesel produced by transesterification process is subjected to neutralization and methanol recovery, is followed by purification by adsorption utilizing an adsorbent such as celite in the range of 2-10%.

In yet another feature of the present invention an alternative to adsorption methodology, the crude alkaline biodiesel produced by transesterification process is directly and/or after neutralization is subjected to purification using LLE.

In yet another feature of the present invention the alkaline ester layer is treated with methanol containing various proportions of water, normally in the range of 1-20 per cent preferably 1-15 percent.

In yet another feature of the present invention the solvent used is methanol or is the same solvent as used for LLE and transesterification.

In yet another feature of the present invention the ratio of alkaline ester and the aqueous methanol used is in the range of 1:0.5 to1:3.

In yet another feature of the present invention the alkaline ester and the aqueous methanol mixture are mixed under reflux, stirring or simply warmed and settled into two layers, ester layer and the aqueous solvent layer which are separated.

In yet another feature of the present invention the separated layer comprising of the major biodiesel fraction, the solvent is removed and dried, there by is obtained an ester free of alkalinity and undesirable contaminants and of high purity.

In yet another feature of the present invention the aqueous methanolic layer is neutralized, solvent recovered and the salts removed by filtration and the impure ester (containing FFA, traces of glycerol etc.,) is recycled along with the feed during the process operation.

In yet another feature of the present invention the impure biodiesel that is prepared by transesterification route having an acid value above the required specifications can be subjected to partition into a major purer fraction comprising of biodiesel meeting the required specifications and a minor impure fraction which can be recycled back in the process.

The following examples illustrate the claims of the process using the equipment designed, fabricated and used in the experiments and therefore should not be construed to limit the scope of the invention.

Synthetic mixtures of refined sunflower oil with added technical grade oleic acid having an FFA 8.6 are made for testing the efficiency of the LLE process.

### Example 1.

100g of the synthetic mixture of the above mentioned mixture (feed) having an acid value of 8.6 is extracted (LLE) using IICT-RaoKVSA Liquid-Liquid Extractor-1 for a period of 5 hrs with continuous manual addition of the solvent. Raffinate samples were drawn at regular intervals and after solvent removal acid value was determined. The acid value was decreased to 0.7after 5 hrs.

### Example 2

100g of the synthetic mixture as above example 1, is extracted using IICT-RaoKVSA Liquid-Liquid Extractor-2 for a period of 4 hrs. with continuous controlled addition of the solvent with a metering pump. Raffinate is drawn using the sampler at regular intervals and after the solvent removal acid value is determined. The acid value is decreased to 0.2 after 4 hrs. extraction.

### Example 3

100g of Crude Jatropha oil (feed) having an acid value of 8.9 is extracted by (LLE) using IICT-RaoKVSA Liquid-Liquid Extractor-1 for a period of 4 hrs. Raffinate samples are drawn at regular intervals and after the solvent removal it is analyzed for acid value. In another similar experiment after 4 hrs of extraction and after solvent removal raffinate obtained is 94 g having an acid value of 0.5 and the extract obtained after solvent removal is 6 g.

### Example 4

100 g of Jatropha oil (feed) having an acid value of 8.9 is extracted (LLE) using IICT-RaoKVSA extractor-2 for a period of 3 hrs with continuous controlled addition of the solvent with a metering pump. The raffinate obtained after solvent removal is 93g having an acid value of 0.3 and extract after solvent removal is 7 g.

### Example 5

100 g of Karanja oil (feed) having an acid value of 9.2 is extracted (LLE) using IICT-RaoKVSA extractor-2 for 3 hrs. with continuous controlled addition of the solvent with a metering pump. The raffinate obtained after solvent removal is 91 g having an acid value of 0.4 and the extract after solvent removal is 9 g.

### Example 6

15 kg of crude Jatropha Oil having an acid value of 8.9 and methanol at the ratios of 1:1 is continuously fed into a CSTR (Figure 3) with a flow rate of 1.8 kg/hr feed and the over flow of the mixture from the reactor is continuously settled hot and separated. There obtained a raffinate-1 of 14.0 kg after solvent removal having an acid value of 2.36. The extract after solvent removal is 0.88 kg.

### Example 7

13 Kg of the raffinate-1 of example 6 as above is recycled in a similar manner and there obtained a raffinate-2 of 12.33 kg having an acid value of 0.31

### Example 8

550 g of the raffinate-2 obtained from above example 7 is transesterified using 0.5% sodium methoxide as catalyst for two hrs with stirring under reflux. The reaction product transferred hot into a separating funnel where the glycerol phase and alkaline ester phases are separated after settling for 1 hr. The glycerol phase after neutralization with methanolic sulphuric acid, centrifuged and filtered. After solvent removal and separation of the residual ester, if any, there obtained a glycerol 48.37 g of 85% purity. The alkaline ester phase after neutralization with dil. methanolic sulphuric acid to a pH 7 followed by solvent removal and drying is filtered though G-2 sintered funnel on a bed of Celite, gave an ester weighing 480 g with the following characteristics. AV 0.25, Moisture 0.05% and Free Glycerol 0.2%,.

### Example 9

550 g of raffinate-2 from example 7 above is transesterified and there obtained after separation an alkaline ester phase which on direct partition using 5% aqueous methanol in a ratio of 1:1 after solvent removal gave a high pure ester 466 g and aqueous methanolic phase containing the impure ester weighing 33.3 g after neutralization and solvent removal is recycled. The pure ester has the following characteristics. AV 0.09, Moisture 0.032% and Free Glycerol 0.004%.

### Example 10

550 g of the raffinate-2 from example 7 is transesterified and the alkaline ester phase on purification by direct partition using 10% aqueous methanolic mixture in a ratio of 1:1 gave a high pure ester weighing 470 g and an impure ester weighing 23.4 g which on neutralization and solvent removal can be recycled. The characteristics of the pure ester is AV 0.05, Moisture 0.031% and Free Glycerol 0.0037%.

### Example 11

10 kg of raffinate-2 from example 7 was continuously transesterified using a CSTR (Figure 3) and methanolic sodium methoxide with a feed rate of 2 kg per hour. The over flow of the transesterified product was continuously fed into a separator where the glycerol phase and ester phases were continuously separated and treated as follows:
(a) About 500 g of the alkaline ester phase is neutralized and solvent removed and filtered through G-2 funnel on a bed of Celite and there by obtained an ester having the following characteristics. AV 0.4, Moisture 0.026% and Free Glycerol 0.019%
(b) About 500 g alkaline ester phase is directly partitioned using 5% aqueous solvent mixture and there by obtained an ester which after removal of solvent and drying having the following characteristics. AV 0.05, Moisture 0.027% and Free Glycerol 0.004%.

### Example 12

About 2 kg of the alkaline ester obtained by continuous transesterification from example 11 is (a) partitioned using 5 % aqueous methanolic solvent mixture in a 10 lts jacketed glass reactor with stirring and warming. After partition, phase separation and desolventization ester phase there obtained an ester weighing 1.8 kg. having the following characteristics AV 0.09. Moisture 0.028% and Free Glycerol 0.0035% The aqueous solvent phase containing 153 g ester after neutralization and solvent removal can be recycled.

### Example 13

Biodiesel sample 500 g obtained by transesterification route and processed by conventional water washing method and having an acid value of 0.9 on partition with aqueous methanolic mixture gave an acid value of 0.3 and the impure ester in the aqueous phase after solvent removal can be recycled.

### Example 14

Biodiesel from Jatropha oil weighing 2 kg. having an acid value of 1.0 and made by conventional water washing method was purified using the partition concept in a 10 It jacketed glass reactor with 1:1 aqueous methanol (5%), stirring and warming. There by obtained a pure ester which after solvent removal weighing 1.82 kg. and having AV of 0.35.

### Example 15

Biodiesel from Karanja oil 500 g obtained by conventional transesterification route and having an acid value of 1.33 on partition with 5% aqueous methanol gave an ester weighing 450 g having an acid value of 0.7 which when subjected to a second partition gave an ester weighing 410 g with an acid value of 0.31. The aqueous methanol containing impure ester can be recycled in the process.

Thus it is concluded that in the biodiesel preparation, the oils having higher fatty acids can be deacidified to the required extent by LLE and in situ esterification of the extracted fatty acids, purification of the transesterified crude alkaline biodiesel by partition protocols yields a biodiesel of international specifications and also the process substantially reduces the solid and liquid effluents and have the added advantages as per our claims.

### Advantage

In the present invention wherein the deacidification of vegetable oils by LLE, in situ esterification of the extract followed by transesterification and subsequent purification of the crude ester by LLE significantly minimizes the requirement of mineral acid and base, thereby reducing the generation of solid effluents (salts) and generates no liquid effluents (process wash water).

## Claims

1. An improved process for the preparation of biodiesel from crude jatropha or karanja oil containing high FFA and the said process comprising the steps of:
a) deacidifying the crude jatropha or karanja oil containing high free fatty acid by liquid- liquid extraction with polar organic solvent in an extraction equipment either in a batch or continuous mode to obtain the resultant oil raffinate and an extract (solvent phase) containing FFA, polar materials and the bioactive components.
b) esterifying in situ the above said extract containing FFA obtained in step (a) with an acid catalyst by known method to obtain the resultant esterified extract and mixing it to the oil raffinate obtained in step(a), followed by adsorptive filtration to remove the free suspended solids (dag layer) and
c) subjecting the resultant oil filtrate obtained in step (b) to transesterification using methanol, in the presence of base catalyst by known method, followed by the separation of crude ester from glycerol phase and purifying the crude ester either by celite adsorption after neutralization and solvent removal or directly by liquid- liquid extraction using 1-20% aqueous polar organic solvent with a ratio of crude ester to solvent in the range of 1 :1 to 1 :4 to separate out the desired pure biodiesel phase and filtering the left out solvent phase after neutralization to obtain the impure ester and recycling it to step (a) along with crude oil feed for further use.

2. An improved process according to claim 1 wherein the FFA content of the jatropha or karanja oil is in the range of 2-30%, preferably 1-10%.

3. A process according to claim 1 or claim 2, wherein the liquid-liquid extraction used in step (a) is carried out at atmospheric pressure and at or below the boiling point of the organic polar solvent.

4. A process according to any preceding claim wherein the polar organic solvent used is selected from methanol and ethanol.

5. A process according to any preceding claim wherein the FFA content in oil raffinate obtained in step(a) is reduced to a value in the range of 0.2-1%.

6. A process according to any preceding claim wherein the proportion of water used in aqueous organic polar solvent in step(c) for purification is in the range of 1-15%.

7. A process according to any preceding claim wherein the ratio of crude ester to aqueous polar organic solvent used in step(c) is in the range of 1 :0.5 to 1 :3.

8. A process according to any preceding claim wherein the crude alkaline ester and aqueous polar organic solvent used in step(c) are mixed under stirring at a refluxing temperature or under simple warm condition.

## Patentansprüche

1. Verbessertes Verfahren für die Herstellung von Biodiesel aus rohem Jatropha- oder Karanjaöl, das einen hohen FFA-Gehalt enthält und wobei das Verfahren die folgenden Schritte umfasst:
a) Entsäuerung des rohen Jatropha- oder Karanjaöls, das einen hohen Gehalt an freier Fettsäure enthält, durch Flüssig-Flüssig-Extraktion mit einem polaren organischen Lösungsmittel in einem Extraktionsgerät entweder im Batch-Modus oder kontinuierlich, um das entstehende Ölraffinat und ein Extrakt (Lösungsmittelphase), der FFA, polare Stoffe und die bioaktiven Komponenten enthält, zu erhalten,
b) Veresterung in situ des vorstehenden, im Schritt (a) erhaltenen Extrakts, der FFA enthält, mit einem Säurekatalysator durch ein bekanntes Verfahren, um den entstehenden veresterten Extrakt zu erhalten, und Mischen von diesem mit dem im Schritt (a) erhaltenen Ölraffinat, wonach eine adsorptive Filtration folgt, um die freien suspendierten Feststoffe (teilchenartige Schicht) zu entfernen, und
c) Unterziehen des im Schritt (b) entstehenden Ölfiltrats einer Umesterung unter Verwendung von Methanol in Gegenwart eines Basenkatalysators durch ein bekanntes Verfahren, wonach Folgendes folgt: die Abtrennung von rohem Ester aus der Glycerolphase und Aufreinigung des rohen Esters entweder durch Celite-Adsorption nach Neutralisation und Entfernung des Lösungsmittels oder direkt durch Flüssig-Flüssig-Extraktion unter Verwendung von 1-20 % wässrigem polarem organischem Lösungsmittel mit einem Verhältnis von rohem Ester zu Lösungsmittel im Bereich von 1 : 1 bis 1 : 4, um die gewünschte reine Biodieselphase abzutrennen, und Filtration der verbleibenden Lösungsmittelphase nach Neutralisation, um den unreinen Ester zu erhalten, und Wiederverwendung von diesem im Schritt (a) zusammen mit der Rohöl-Zufuhr zur weiteren Verwendung.

2. Verbessertes Verfahren nach Anspruch 1, wobei der FFA-Gehalt des Jatropha- oder Karanjaöls im Bereich von 2-30 %, bevorzugt 1-10 % liegt.

3. Verfahren nach Anspruch 1 oder Anspruch 2, wobei die im Schritt (a) angewendete Flüssig-Flüssig-Extraktion bei Atmosphärendruck und am Siedepunkt oder unterhalb des Siedepunkts des organischen polaren Lösungsmittel durchgeführt wird.

4. Verfahren nach einem vorstehenden Anspruch, wobei das verwendete polare organische Lösungsmittel aus Methanol und Ethanol ausgewählt ist.

5. Verfahren nach einem vorstehenden Anspruch, wobei der FFA-Gehalt in dem im Schritt (a) erhaltenen Ölraffinat auf einen Wert im Bereich von 0,2-1 % verringert ist.

6. Verfahren nach einem vorstehenden Anspruch, wobei der Anteil an Wasser, das in dem wässrigen organischen polaren Lösungsmittel im Schritt (c) für die Aufreinigung verwendet wird, im Bereich von 1-15 % liegt.

7. Verfahren nach einem vorstehenden Anspruch, wobei das Verhältnis von rohem Ester zu wässrigem polarem organischem Lösungsmittel, das im Schritt (c) verwendet wird, im Bereich von 1 : 0,5 bis 1 : 3 liegt.

8. Verfahren nach einem vorstehenden Anspruch, wobei der rohe alkalische Ester und das wässrige polare organische Lösungsmittel, das im Schritt (c) verwendet wird, unter Rühren bei einer Rückflusstemperatur oder unter einfacher warmer Bedingung gemischt werden.

## Revendications

1. Procédé amélioré de préparation de biodiesel à partir d'huile de Jatropha ou de Karanja brute ayant une teneur élevée en AGL, ledit procédé contenant les étapes consistant à :
a) désacidifier l'huile de Jatropha ou de Karanja brute à teneur élevée en acides gras libres par une extraction liquide-liquide à l'aide d'un solvant organique polaire dans un équipement d'extraction, en mode discontinu ou bien continu, afin d'obtenir le raffinat d'huile résultant et un extrait (phase de solvant) contenant des AGL, des matériaux polaires et les composants bioactifs,
b) estérifier *in situ* ledit extrait ci-dessus contenant des AGL obtenu dans l'étape (a) avec un catalyseur acide par une méthode connue afin d'obtenir l'extrait estérifié résultant et mélanger celui-ci au raffinat d'huile obtenu dans l'étape (a), suivi d'une filtration d'adsorption afin d'éliminer les matières solides libres en suspension (« dag layer ») et
c) soumettre le filtrat d'huile résultant obtenu dans l'étape (b) à une transestérification en utilisant du méthanol, en présence d'un catalyseur basique par une méthode connue, suivie de la séparation de l'ester brut à partir de la phase de glycérol et la purification de l'ester brut par adsorption sur Célite après neutralisation et élimination du solvant ou bien directement par extraction liquide-liquide en utilisant un solvant organique polaire aqueux à 1-20% avec un rapport d'ester brut au solvant dans la plage allant de 1:1 à 1:4 afin de séparer la phase de biodiesel pure désirée et filtrer la phase de solvant restante après neutralisation afin d'obtenir l'ester impur et le recyclage de celui-ci vers l'étape (a) conjointement avec l'alimentation en huile brut pour une utilisation supplémentaire.

2. Procédé amélioré selon la revendication 1, dans lequel la teneur en AGL de l'huile de Jatropha ou de Karanja se trouve dans la plage de 2-30%, préférablement de 1-10%.

3. Procédé selon la revendication 1 ou la revendication 2, dans lequel l'extraction liquide-liquide utilisée dans l'étape (a) est effectuée à pression atmosphérique et à une température égale ou inférieure au point d'ébullition du solvant polaire organique.

4. Procédé selon l'une quelconque des revendications précédentes, dans lequel le solvant polaire organique utilisé est choisi parmi le méthanol et l'éthanol.

5. Procédé selon l'une quelconque des revendications précédentes, dans lequel la teneur en AGL dans le raffinat d'huile obtenu dans l'étape (a) est réduite jusqu'à une valeur dans la plage de 0,2-1%.

6. Procédé selon l'une quelconque des revendications précédentes, dans lequel la proportion d'eau utilisée dans le solvant polaire organique aqueux dans l'étape (c) pour la purification se trouve dans la plage de 1-15%.

7. Procédé selon l'une quelconque des revendications précédentes, dans lequel le rapport d'ester brut au solvant organique polaire aqueux utilisé dans l'étape (c) se trouve dans la plage allant de 1:0,5 à 1:3.

8. Procédé selon l'une quelconque des revendications précédentes, dans lequel l'ester alcalin brut et le solvant organique polaire aqueux utilisé dans l'étape (c) sont mélangés sous agitation à une température de reflux ou dans des conditions chaudes simples.
